# EUROPÄISCHE PATENTSCHRIFT

(11) **EP 4 466 976 B1**
(45) Veröffentlichungstag und Bekanntmachung des Hinweises auf die Patenterteilung: **10.09.2025**
(21) Anmeldenummer: 24169939.6
(22) Anmeldetag: 12.04.2024
(51) Int. Cl.: A01F 15/07, A01F 15/08, A01F 15/10, A01F 15/18

(54) **GETRIEBEEINHEIT**
TRANSMISSION UNIT
UNITÉ DE TRANSMISSION

(30) Priorität: 26.05.2023 DE 102023113954
(43) Veröffentlichungstag der Anmeldung: 27.11.2024
(73) Patentinhaber: Maschinenfabrik Bernard Krone GmbH & Co. KG, 48480 Spelle (DE)
(72) Erfinder: Eckseler, Hermann, 48480 Spelle (DE); Kalverkamp, Felix, 45665 Recklinghausen (DE); Knifke, Christian, 45665 Recklinghausen (DE); Kopmeyer, Sven, 49076 Osnabrück (DE); Kreker, Aleksej, 49492 Westerkappeln (DE)

(56) Entgegenhaltungen:
- EP-A1- 2 556 744
- EP-A1- 4 176 705
- EP-A1- 4 183 244
- EP-B1- 0 970 599
- US-A1- 2022 330 487
- US-A1- 2022 408 654
- US-B2- 7 181 899

## Beschreibung

Die vorliegende Erfindung betrifft eine Getriebeeinheit nach dem Oberbegriff von Anspruch 1 sowie eine Rundballenpresse nach dem Oberbegriff von Anspruch 15.

Rundballenpressen werden in der Landwirtschaft eingesetzt, um Erntegut wie zum Beispiel Heu oder Stroh vom Boden aufzunehmen und zu runden Erntegutballen zu verpressen, die anschließend mit einem Bindematerial umwickelt werden können. Als Bindematerial können Schnüre, Netze oder (zum Beispiel im Falle von Gras) Folien verwendet werden, wobei letztere auch außerhalb der Rundballenpresse in einem hiervon separaten Ballenwickelgerät appliziert werden können. Das Erntegut wird zunächst (normalerweise durch eine Pick-up) vom Boden aufgenommen und weiter an einen Förderrotor oder Schneidrotor übergeben, der das Erntegut über einen Zuführkanal zur Ballenbildungskammer beziehungsweise Presskammer fördert, in welcher das eigentliche Verpressen erfolgt. Dort wirken Presselemente auf das Erntegut ein, die auch als Förderelemente wirken und eine umlaufende Bewegung des Ernteguts erzeugen. Bei Rundballenpressen mit variabler Kammer wird die effektive Größe der Kammer an die zunehmende Menge von Erntegut angepasst, wobei wenigstens ein endlos umlaufendes Presselement einen überwiegenden Teil der Presskammer definiert. Das Presselement kann zum Beispiel als Stabkettenförderer mit umlaufenden Ketten und dazwischen verlaufenden Stäben ausgebildet sein oder einen beziehungsweise normalerweise mehrere Pressgurte oder -riemen aufweisen. Es ist über eine Mehrzahl von Führungsrollen geführt, von denen wenigstens eine antreibbar ist. Dort, wo der Zuführkanal in die Presskammer mündet, ist oftmals ein Walzenpaar angeordnet, welches einen Zuführspalt für das Erntegut definiert. Wenigstens eine dieser Walzen ist antreibbar.

Es ist im Stand der Technik bekannt (siehe EP 0970599), eine Antriebsleistung in ein Verteilergetriebe einzukoppeln, welches diese Antriebsleistung aufteilt und an das Presselement, wenigstens ein Zuführelement (Förderrotor, Schneidrotor und/oder Pick-up) sowie gegebenenfalls an eine der genannten Walzen weiterleitet. Beispielsweise kann die Antriebsleistung über eine Welle mit entsprechender Kupplung von einem Schlepper übertragen werden, der die Rundballenpresse zieht. Diese Art der Aufteilung und Übertragung der Antriebsleistung ist effizient, kann allerdings zu Problemen führen, falls eine der angetriebenen Komponenten unabhängig bewegt werden soll. Namentlich kann es zu einer Blockade des Zuführelements kommen, entweder weil zu viel Erntegut aufgenommen wurde oder weil ein Fremdkörper wie ein Stein mit eingezogen wurde. In diesem Fall muss zumindest das Zuführelement zunächst gestoppt werden, danach muss es ein Stück rückwärts bewegt werden, also entgegengesetzt zur normalen Antriebsrichtung. Wenn aber das Zuführelement über das Verteilergetriebe an das Presselement gekoppelt ist, müsste Letzteres mit bewegt werden. Zum Beispiel müsste der Pressriemen einschließlich sämtlicher Führungsrollen rückwärts bewegt werden. Während das Zuführelement (Förderrotor o.Ä.) für sich genommen manuell bewegt werden könnte, ist dies praktisch ausgeschlossen, wenn einen mechanische Kopplung an das Presselement besteht. Auch wenn das Zuführelement stattdessen durch einen motorischen Antrieb rückwärts bewegt werden könnte, wäre eine gleichzeitige Rückwärtsbewegung des Presselements unökonomisch und könnte die Ballenbildung stören.

Aufgabe der Erfindung ist es, bei einer Rundballenpresse einen verbessertes System zur Verteilung eines Antriebsdrehmoments auf ein Presselement und ein Zuführelement vorzuschlagen, welches eine effiziente Beseitigung eines Erntegutstaus ermöglicht.

Die Aufgabe wird gelöst mit einer Getriebeeinheit mit den Merkmalen des unabhängigen Patentanspruchs 1. Vorteilhafte Ausführungsformen sind den abhängigen Ansprüchen entnehmbar.

Dafür wird eine Getriebeeinheit für eine Rundballenpresse geschaffen, mit einem zum Einkoppeln eines Antriebsdrehmoments ausgebildeten Antriebsteil, aufweisend eine um eine Antriebswellen-Drehachse drehbare Antriebswelle, einem Presselement-Abtriebsteil, an welchen der Antriebsteil antreibend gekoppelt ist und welcher dazu vorgesehen ist, wenigstens indirekt ein Presselement anzutreiben, um auf Erntegut in einer Presskammer einzuwirken, einem Zuführelement-Abtriebsteil, welcher dazu vorgesehen ist, wenigstens indirekt ein Zuführelement anzutreiben, um Erntegut zur Presskammer hin zu fördern, sowie einem Kopplungsmechanismus zum wahlweisen Koppeln und Entkoppeln von Antriebsteil und Zuführelement-Abtriebsteil,

Die Rundballenpresse, für welche die Getriebeeinheit vorgesehen ist, ist zum Pressen von landwirtschaftlichem Erntegut zu (Rund-)Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln, aber zum Beispiel auch um Häckselmais. Die Rundballenpresse weist einen Rahmen auf, der gewissermaßen ihre Grundstruktur bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich eine Pressvorrichtung, nach außen abschirmt.

Das Erntegut kann mit einer Pick-up aufgenommen werden und mit einer zum Beispiel einem Förderrotor, weiter in Richtung der Presskammer gefördert werden. Statt eines einfachen Förderrotors oder zusätzlich zu diesem kann ein Schneidrotor vorgesehen sein, der das Erntegut nicht nur weiterfördert, sondern auch schneidet. Normalerweise weist die Rundballenpresse einen Zuführkanal auf, den der Erntegutstrom durchläuft, bevor er zur Presskammer gelangt. Jedes bewegliche Element, welches dazu dient, das Erntegut in Richtung der Presskammer zu fördern, also insbesondere ein Förderrotor, ein Schneidrotor und/oder eine Pick-up, wird hier und im Folgenden als Zuführelement bezeichnet.

Die Formung des Erntegutballens und somit auch der eigentliche Pressvorgang erfolgen innerhalb der Presskammer durch eine Pressvorrichtung, welche wenigstens teilweise, gegebenenfalls auch vollständig, innerhalb eines Rahmens angeordnet sein kann. Die Presskammer, in der die Ballenbildung und das Pressen des Ballens erfolgen, ist wenigstens teilweise durch die Pressvorrichtung begrenzbar oder definierbar. Die Pressvorrichtung weist wenigstens ein gegenüber dem Rahmen antreibbares Presselement auf. In diesem Zusammenhang kann das Presselement aus einer oder mehreren Komponenten bestehen, wie nachfolgend noch erläutert wird. Es können auch eine Mehrzahl von Presselementen vorgesehen sein. Das jeweilige Presselement wirkt auf das Erntegut in der Presskammer ein und ist somit maßgeblich an der eigentlichen Ballenbildung beteiligt.

Die erfindungsgemäße Getriebeeinheit ist in eingebautem Zustand an der Rundballenpresse oder innerhalb derselben montiert. Sie weist bevorzugt ein Getriebegehäuse auf, an welchem verschiedene Getriebekomponenten beweglich gelagert sein können und in welchem sie aufgenommen sein können, um sie vor Verschmutzung und Beschädigung zu schützen. Das Getriebegehäuse kann insbesondere direkt oder indirekt am Rahmen der Rundballenpresse montiert werden.

Die Getriebeeinheit weist einen Antriebsteil auf, der zum Einkoppeln eines Antriebsdrehmoments ausgebildet und vorgesehen ist. Das heißt ein Antriebsdrehmoment, das durch eine Motor erzeugt wird, kann über den Antriebsteil in die Getriebeeinheit eingekoppelt werden. Im Betriebszustand ist der Motor antreibend an den Antriebsteil gekoppelt. Der Motor kann Teil der Rundballenpresse sein oder aber zum Beispiel Teil eines Schleppers, der die Rundballenpresse zieht. In diesem Zusammenhang muss der Antriebsteil nicht direkt an den Motor koppelbar sein, auch eine indirekte Kopplung über wenigstens ein weiteres Element ist möglich. Der Antriebsteil weist eine Antriebswelle auf, die um eine Antriebswellen-Drehachse drehbar ist. Die Antriebswelle ist bevorzugt an dem oben genannten Getriebegehäuse drehbar gelagert, zum Beispiel über ein oder mehrere Wälzlager. Sie kann einstückig ausgebildet sein oder aus einer Mehrzahl starr verbundener Elemente bestehen. Der Antriebsteil kann neben der Antriebswelle weitere Bauteile aufweisen. Statt von einem Antriebsteil kann man auch von einem Antriebs-Teilgetriebe sprechen. Ebenso können die nachfolgend besprochenen Abtriebsteile auch als Abtriebs-Teilgetriebe bezeichnet werden.

Die Getriebeeinheit weist außerdem einen Presselement-Abtriebsteil auf, an welchen der Antriebsteil antreibend gekoppelt ist und welcher dazu vorgesehen ist, wenigstens indirekt ein Presselement anzutreiben, um auf Erntegut in der Presskammer einzuwirken. Im Betriebszustand erfolgt der Kraftfluss vom Antriebsteil zum Presselement-Abtriebsteil, das heißt ein Teil der Antriebsleistung wird vom Antriebsteil zum Presselement-Abtriebsteil übertragen. Insofern ist ersterer antreibend an letzteren gekoppelt. Man kann auch von einer kraftübertragenden oder bewegungsübertragenden Kopplung sprechen. Der Presselement-Abtriebsteil der Getriebeeinheit treibt in eingebautem Zustand - entweder direkt oder indirekt über ein zwischengeordnetes Element - ein Presselement an. Die grundsätzliche Funktion eines solchen Presselements wurde bereits erläutert.

Weiterhin weist die Getriebeeinheit einen Zuführelement-Abtriebsteil auf, welcher dazu vorgesehen ist, wenigstens indirekt ein Zuführelement anzutreiben, um Erntegut zur Presskammer hin zu fördern, sowie einen Kopplungsmechanismus zum wahlweisen Koppeln und Entkoppeln von Antriebsteil und Zuführelement-Abtriebsteil. Der Zuführeinheit-Abtriebsteil treibt in eingebautem Zustand ein Zuführelement an, dessen Funktion bereits erläutert wurde. Auch hier kann die Verbindung direkt oder indirekt sein. Dabei ist der Zuführelement-Abtriebsteil nicht dauerhaft an den Antriebsteil gekoppelt, sondern kann durch den Kopplungsmechanismus entkoppelt werden. In gekoppeltem Zustand ist der Zuführelement-Abtriebsteil durch den Antriebsteil angetrieben, das heißt ein Teil der Antriebsleistung wird vom Antriebsteil zum Zuführelement-Abtriebsteil übertragen. In entkoppeltem Zustand kann der Zuführelement-Abtriebsteil unabhängig vom Antriebsteil bewegt werden oder auch in Ruhe gehalten werden. In zusammengebautem Zustand kann bei einer Blockade im Bereich des Zuführelements, beispielsweise eines Förderrotors, das Zuführelement gestoppt oder auch händisch rückwärts bewegt werden, um Erntegut oder Fremdkörper zu entfernen. Während das Zuführelement zurück bewegt wird, können der Antriebsteil und der Presselement-Abtriebsteil stationär bleiben, müssen also nicht mitbewegt werden. Es wäre auch denkbar, Antriebsteil und Presselement-Abtriebsteil weiterlaufen zu lassen, falls zum Beispiel ein Erntegutballen fertiggestellt werden soll, während die Blockade entfernt wird.

Erfindungsgemäß weist der Kopplungsmechanismus ein erstes Kopplungszahnrad auf, das verdrehsicher mit der Antriebswelle verbunden und axial gegenüber dieser verstellbar ist, wodurch es wahlweise in einer Kopplungsstellung mit dem Zuführelement-Abtriebsteil antreibend koppelbar und in einer Freigabestellung von diesem entkoppelbar ist, wobei das erste Kopplungszahnrad sowohl in der Kopplungsstellung als auch in der Freigabestellung antreibend an den Presselement-Abtriebsteil gekoppelt ist. Die Antriebswelle und das erste Kopplungszahnrad können formschlüssig über Führungsstrukturen zusammenwirken, die eine axiale Verschiebung ermöglichen, aber eine tangentiale Verdrehung einschränken oder verhindern. Z.B. kann die Antriebswelle Führungsnuten aufweisen, in welche Vorsprünge des ersten Kopplungszahnrads eingreifen. Hier und im Folgenden bedeutet "verdrehsicher" stets, dass die Verbindung eine allenfalls eingeschränkte relative Drehung erlaubt. Das heißt die Verbindung kann in tangentialer Richtung ein gewisses Spiel aufweisen. Bevorzugt liegt allerdings kein nennenswertes Spiel vor. In diesem Fall kann eine derartige Verbindung als drehfest bezeichnet werden. Aufgrund der Verbindung dreht sich das erste Kopplungszahnrad mit der Antriebswelle mit. Es kann aufgrund seiner axialen Beweglichkeit gegenüber der Antriebswelle zwischen einer Kopplungsstellung und einer Freigabestellung verstellt werden. In der Kopplungsstellung ist es antreibend mit dem Zuführelement-Abtriebsteil gekoppelt. Es wird somit über die Antriebswelle und das erste Kopplungszahnrad eine antreibende Kraft sowie ein antreibendes Drehmoment auf den Zuführelement-Abtriebsteil übertragen. Wird das erste Kopplungszahnrad in die Freigabestellung verstellt, indem es axial gegenüber der Antriebswelle verschoben wird, ist es vom Zuführelement-Abtriebsteil entkoppelt, so dass letzterer auch vom Antriebsteil entkoppelt ist. Dabei wirkt das erste Kopplungszahnrad allerdings in beiden Stellungen mit dem Presselement-Abtriebsteil zusammen. Wenngleich dies nicht zwingend erforderlich ist, ist die entsprechende Kopplung bevorzugt auch in sämtlichen Stellungen zwischen Kopplungsstellung und Freigabestellung gegeben. Der Antriebsteil ist jedenfalls über das erste Kopplungszahnrad in beiden Stellungen antreibend an den Presselement-Abtriebsteil gekoppelt. Bevorzugt wirkt das erste Kopplungszahnrad mit einem Zahnrad des Presselement-Abtriebsteils zusammen, das heißt es kämmt mit diesem.

Dabei können beide Zahnräder bevorzugt als Stirnräder ausgebildet sein, wenngleich auch eine Ausbildung als Kegelrad oder Kronenrad möglich ist.

Somit kommt dem ersten Kopplungszahnrad eine doppelte Funktion zu: Zum einen stellt es die Antriebskopplung zum Presselement-Abtriebsteil her, zum anderen stellt es in der Kopplungsstellung die Kopplung zum Führungselement-Abtriebsteil her und entkoppelt letzteren vom Antriebsteil, wenn es in der Freigabestellung ist. Es dient also zur Aufteilung und Übertragung der Antriebsleistung auf die beiden Abtriebsteile und bildet gleichzeitig ein wesentliches Element des Kopplungsmechanismus. Insofern vereint das erste Kopplungszahnrad Getriebe- und Kupplungsfunktionen in sich. Die genannten Funktionen werden durch ein einziges Bauteil realisiert. Gegenüber einem Getriebe, bei dem jede Funktion durch ein eigenen Bauteil realisiert ist, wird nicht nur die Teilezahl reduziert, sondern es wird auch Bauraum eingespart.

Besonders bevorzugt weist der Zuführelement-Abtriebsteil ein zweites Kopplungszahnrad auf, das die Antriebswelle koaxial umgibt, wobei das erste Kopplungszahnrad in der Kopplungsstellung durch einen Formschluss mit dem zweiten Kopplungszahnrad dieses verdrehsicher mit der Antriebswelle verbindet, während das zweite Kopplungszahnrad durch Aufheben des Formschlusses in der Freigabestellung frei gegenüber der Antriebswelle drehbar ist. Das zweite Kopplungszahnrad ist für sich betrachtet drehbar auf der Antriebswelle gelagert, das heißt es kann sich relativ zur Antriebswelle drehen (und umgekehrt), solange keine Verbindung über ein weiteres Element gegeben ist. Eben diese Verbindung wird durch das erste Kopplungszahnrad hergestellt, wenn es in der Kopplungsstellung ist. Dabei wird ein Formschluss zwischen den beiden Kopplungszahnrädern hergestellt, der das zweite Kopplungszahnrad verdrehsicher mit dem ersten Kopplungszahnrad und somit auch mit der Antriebswelle verbindet. Wenigstens ein Kopplungszahnrad kann in axialer Richtung vorspringende Strukturen aufweisen, die in entsprechende Ausnehmungen im anderen Kopplungszahnrad eingreifen. Insbesondere können die beiden Kopplungszahnräder über eine Klauenkupplung miteinander verbunden werden. Es versteht sich, dass das erste Kopplungszahnrad in der Kopplungsstellung näher am zweiten Kopplungszahnrad angeordnet ist als in der Freigabestellung. Wird das erste Kopplungszahnrad wiederum in die Freigabestellung bewegt, wird der Formschluss aufgelöst und das zweite Kopplungszahnrad kann unabhängig von der Antriebswelle gedreht werden. Insbesondere kann es auch stationär bleiben, während sich die Antriebswelle dreht. Das zweite Kopplungszahnrad kann insbesondere als Stirnrad ausgebildet sein, es wäre aber auch eine Ausgestaltung als Kegelrad oder Kronenrad denkbar.

Eine Ausgestaltung sieht vor, dass die Getriebeeinheit ein Getriebegehäuse zur stationären Anordnung an der Rundballenpresse aufweist und die Antriebswelle einen am Getriebegehäuse drehbar gelagerten Lagerabschnitt aufweist sowie einen freitragenden Abschnitt, wobei die Kopplungszahnräder am freitragenden Abschnitt angeordnet sind. In diesem Fall ist die Antriebswelle über ein oder mehrere Lager, typischerweise Wälzlager, drehbar am Getriebegehäuse gelagert. Der entsprechende Abschnitt der Antriebswelle, in welchem Kräfte zwischen der Antriebswelle und dem Getriebegehäuse übertragen werden können, wird als Lagerabschnitt bezeichnet. Ein Teil der Antriebswelle erstreckt sich jenseits des Lagerabschnitts und bildet einen freitragenden Abschnitt. An diesem freitragenden Abschnitt sind die Kopplungszahnräder angeordnet. Sie sind somit, entlang der Antriebswellen-Drehachse gesehen, nur auf einer Seite durch Lager abgestützt. Diese Bauform erleichtert den Zusammenbau der Getriebeeinheit. Da typischerweise ein Großteil des gesamten Drehmoments auf den Zuführelement-Abtriebsteil und das hiermit verbundene Zuführelement übertragen werden muss, ist es günstig, das hiermit zusammenwirkende zweite Kopplungszahnrad näher am Lagerabschnitt anzuordnen. Das heißt, bevorzugt ist das zweite Kopplungszahnrad näher am Lagerabschnitt angeordnet als das erste Kopplungszahnrad.

Die Getriebeeinheit kann zur Aufteilung des Antriebsdrehmoments auf mehr als ein Presselement-Abtriebsteil dienen. Gemäß einer Ausführungsform ist das erste Kopplungszahnrad antreibend mit einem ersten Presselement-Abtriebsteil gekoppelt ist und ein verdrehsicher mit der Antriebswelle verbundenes Antriebswellen-Zahnrad ist antreibend mit einem zweiten Presselement-Abtriebsteil gekoppelt. Das heißt die Getriebeeinheit weist ein erstes und ein zweites Presselement-Abtriebsteil auf. Diese können einem ersten und einem zweiten Presselement zugeordnet werden. Die Bezeichnungen "erstes" und "zweites" dienen nur zur Unterscheidung und kennzeichnen keine Wichtigkeit oder Reihenfolge der Presselemente oder der Presselement-Abtriebsteile. Das Antriebswellen-Zahnrad ist koaxial auf der Antriebswelle angeordnet. Es stellt die Antriebsverbindung zum zweiten Presselement-Abtriebsteil her. Dementsprechend greift es in der Regel mit einem ihm zugeordneten zweiten Presselement-Zahnrad ein. Es kann insbesondere als Kegelrad ausgebildet sein, wenngleich auch eine Ausgestaltung als Stirnrad oder Kronenrad denkbar wäre.

Insbesondere kann der erste Presselement-Abtriebsteil dazu vorgesehen sein, wenigstens indirekt eine Presswalze in einem Zuführbereich der Presskammer anzutreiben, und der zweite Presselement-Abtriebsteil kann dazu vorgesehen sein, wenigstens indirekt ein endloses, umlaufend antreibbares Presselement anzutreiben. Die Presswalze, welche hier ein erstes Presselement bildet, kann insbesondere als Starterwalze ausgebildet sein. Sie wirkt unmittelbar auf das Erntegut ein. Sie kann einseitig einen Zuführspalt definieren, durch welchen das Erntegut in die Presskammer gelangt. In montiertem Zustand wird die Bewegung des ersten Presselement-Antriebsteils direkt oder indirekt auf die Presswalze übertragen. Das zweite Presselement ist in dieser Ausgestaltung ein gegenüber dem Rahmen der Rundballenpresse umlaufend antreibbares, endloses Presselement. Ein derartiges Presselement kann aus einer oder mehreren Komponenten bestehen. Das Presselement ist dabei über eine Mehrzahl von Führungsrollen oder Spannrollen geführt, von denen wenigstens eine über den zweiten Presselement-Abtriebsteil antreibbar ist und somit als Antriebsrolle bezeichnet werden kann. Das Presselement kann als endloses Kettenstabband ausgebildet sein. Auch wäre es denkbar, dass das Presselement eine Mehrzahl separater, nebeneinander verlaufender Pressriemen aufweist. Insbesondere kann es als ein einzelner Pressriemen ausgebildet sein.

Hinsichtlich des Antriebs der Presswalze sind unterschiedliche Möglichkeiten gegeben. Eine Ausgestaltung sieht vor, dass der erste Presselement-Abtriebsteil ein Presswalzen-Zahnrad aufweist, das zur verdrehsicheren Verbindung mit einer Presswalze vorgesehen ist und das, entweder direkt oder indirekt über wenigstens ein Zwischenzahnrad, mit dem ersten Kopplungszahnrad zusammenwirkt. Das Presswalzen-Zahnrad entspricht dabei also dem ersten Presselement-Zahnrad. Das erste Kopplungszahnrad kann unmittelbar mit dem Presswalzen-Zahnrad eingreifen, das seinerseits koaxial an der Presswalze angeordnet ist. Die Kraftübertragung von der Antriebswelle auf die Presswalze erfolgt dann also über lediglich zwei Zahnräder, was die Zahl der benötigten Bauteile reduziert und außerdem für einen geringen Verschleiß sorgt. Alternativ kann das erste Kopplungszahnrad aber auch über wenigstens ein Zwischenzahnrad mit dem Presswalzen-Zahnrad zusammenwirken. Insgesamt erfolgt die Kraftübertragung zum ersten Presselement ausschließlich über zusammenwirkenden Zahnräder, was einen geringen Verschleiß mit sich bringt.

Gemäß einer Ausführungsform weist der Förderelement-Abtriebsteil ein Förderelement-Zahnrad auf, das zur verdrehsicheren Verbindung mit dem Förderelement vorgesehen ist und das, entweder direkt oder indirekt über wenigstens ein Zwischenzahnrad, mit dem zweiten Kopplungszahnrad zusammenwirkt. Das heißt in montiertem Zustand ist das Förderelement-Zahnrad verdrehsicher mit dem Förderelement verbunden. Es dreht sich somit synchron und koaxial mit diesem. Das Förderelement-Zahnrad wirkt entweder direkt mit dem zweiten Kopplungszahnrad zusammen, das heißt die beiden Zahnräder kämmen miteinander, oder sie wirken indirekt über wenigstens ein Zwischenzahnrad. Insbesondere können sie über genau ein Zwischenzahnrad zusammenwirken, so dass der Drehsinn des Förderelement-Zahnrads dem des zweiten Kopplungszahnrads entspricht. Es können auch mehrere Zwischenzahnräder vorgesehen sein. Da die Kraftübertragung zum Förderelement ausschließlich über zusammenwirkenden Zahnräder, wird auch durch diese Ausführungsform der Verschleiß minimiert.

Eine Ausgestaltung sieht vor, dass das Antriebswellen-Zahnrad mit einem Eingangswellen-Zahnrad zusammenwirkt, durch welches das Antriebsdrehmoment auf die Antriebswelle übertragbar ist. Das heißt das Antriebsdrehmoment, das in der Regel von einem Motor erzeugt wird, wird über das Eingangswellen-Zahnrad und das Antriebswellen-Zahnrad auf die Antriebswelle übertragen. Dabei kann das Eingangswellen-Zahnrad insbesondere mit einer Eingangswelle verdrehsicher verbunden sein. Diese wiederum kann direkt oder indirekt kraftübertragend an den Motor gekoppelt sein. Zum Beispiel kann sie eine Klauenkupplung aufweisen, über die das Antriebsdrehmoment von einem Schlepper an die Rundballenpresse übertragen wird. Die Eingangswelle kann zum Beispiel auch als Gelenkwelle ausgebildet sein. Wenn das Antriebsdrehmoment über das Eingangswellen-Zahnrad eingekoppelt wird, welches mit dem Antriebswellen-Zahnrad zusammenwirkt, kann die Kraft beziehungsweise das Drehmoment zum zweiten Presselement-Abtriebsteil ganz oder teilweise durch das Antriebswellen-Zahnrad übertragen werden. Dies kann unter Umständen eine Entlastung der Antriebswelle bedeuten beziehungsweise derjenigen Teile, die nicht das Antriebswellen-Zahnrad bilden. Das Eingangswellen-Zahnrad sowie gegebenenfalls die Eingangswelle können als Elemente des Antriebsteils angesehen werden.

Eine bevorzugte Weiterbildung der Erfindung sieht vor, dass das erste Kopplungszahnrad durch ein Kopplungs-Federelement in Richtung auf die Kopplungsstellung vorgespannt ist. Das Kopplungs-Federelement wirkt direkt oder indirekt zwischen der Antriebswelle und dem Kopplungszahnrad. Es beaufschlagt das Kopplungszahnrad, gegebenenfalls über wenigstens ein zwischengeordnetes Element oder aber direkt, in Richtung auf die Kopplungsstellung. Soweit keine anderen Kräfte der Spannung des Federelements entgegenwirken, nimmt das Kopplungszahnrad also die Kopplungsstellung ein. Das heißt es verbleibt in der Kopplungsstellung oder bewegt sich in diese. Somit entspricht der Zustand, in dem der Zuführelement-Abtriebsteil angekoppelt ist, gewissermaßen einer Ruhelage oder einem Normalzustand. Das Federelement ist elastisch ausgebildet und erzeugt bei einer Auslenkung aus der Kopplungsstellung eine Rückstellkraft. Es kann zum Beispiel als Schraubenfeder ausgebildet sein, welche die Antriebswelle umgibt.

Die Getriebeeinheit weist bevorzugt einen Schaltmechanismus auf, mit wenigstens einem Schaltelement, das zwischen einer Passivstellung und einer Aktivstellung verstellbar ist und beim Verstellen in die Aktivstellung axial seitlich am ersten Kopplungszahnrad angreift und dieses die Freigabestellung verstellt. Das Schaltelement bewirkt also zumindest die Verstellung des ersten Kopplungszahnrads in die Freigabestellung. Die entgegengesetzte Verstellung in die Kopplungsstellung kann entweder ebenfalls durch das Schaltelement erzeugt werden oder aber zum Beispiel durch das oben genannte Kopplungs-Federelement. Die Begriffe "Aktivstellung" und "Passivstellung" deuten darauf hin, dass das Schaltelement gewissermaßen "aktiv" die Verstellung des ersten Kopplungszahnrads in die Freigabestellung bewirkt. Ansonsten sind diese Bezeichnungen allerdings nicht einschränkend auszulegen. Das Schaltelement greift in axialer Richtung bezüglich der Antriebswellen-Drehachse seitlich am ersten Kopplungszahnrad an. Dabei wirkt zumindest eine Kraftkomponente in axialer Richtung auf das Kopplungszahnrad und bewirkt dessen axiale Verschiebung. Unter Umständen muss dabei eine Rückstellkraft des Kopplungs-Federelements überwunden werden. Es ist denkbar, dass sich im Betriebszustand die Antriebswelle mit dem Kopplungszahnrad dreht, während das Schaltelement einwirkt. Insbesondere in diesem Fall kann eine Reibungskraft dadurch reduziert werden, dass das Schaltelement über wenigstens ein Wälzlager mit dem ersten Kopplungszahnrad zusammenwirkt. Das Wälzlager kann mit dem Schaltelement verbunden sein und seine Wälzkörper können auf der axial seitlichen Fläche des ersten Kopplungszahnrads abrollen.

Bevorzugt ist das Schaltelement durch Schwenken um eine Schaltelement-Schwenkachse zwischen der Aktivstellung und der Passivstellung verstellbar und greift mit wenigstens einem von der Schaltelement-Schwenkachse beabstandeten Schaltabschnitt am ersten Kopplungszahnrad an. Eine für die Schwenkbarkeit notwendiges Schwenklager lässt sich im Allgemeinen leichter realisieren als ein Linearlager beziehungsweise ein Linearführung, welche für eine translatorische Verstellung notwendig wären. Der jeweilige Schaltabschnitt ist von der Schaltelement-Schwenkachse beabstandet und bewegt sich daher beim Verstellen zwischen der Aktivstellung und der Passivstellung bogenartig. Insbesondere durch geeignete Wahl des radialen Abstands des Schaltabschnitts von der Schaltelement-Schwenkachse kann festgelegt werden, welcher Schwenkwinkel notwendig ist, um eine vorgesehene Verschiebung des ersten Kopplungszahnrads zu erreichen. Um eine ungleichmäßige Belastung des ersten Kopplungszahnrads zu verhindern, ist es bevorzugt, dass das Schaltelement als Schaltgabel ausgebildet ist und zwei beabstandete Schaltabschnitte aufweist. Die beiden Schaltabschnitte können dann in unterschiedlichen Bereichen des ersten Kopplungszahnrads angreifen, insbesondere in Bereichen, die einander bezüglich der Antriebswellen-Drehachse gegenüberliegen. Der wenigstens eine Schaltabschnitt weist bevorzugt ein Wälzlager auf, mittels dessen er am Kopplungszahnrad angreift.

Gemäß einer Ausgestaltung kann vorgesehen sein, dass das Schaltelement - entweder aktorisch oder manuell - unmittelbar verstellt wird. Gemäß einer anderen Ausgestaltung weist der Schaltmechanismus ein Stellelement auf, das dazu eingerichtet ist, das Schaltelement zu beaufschlagen, um dieses in die Aktivstellung zu verstellen. In diesem Fall kann also das Stellelement verstellt werden, wobei hieraus die Verstellung des Schaltelements in die Aktivstellung erfolgt. Die umgekehrte Verstellung in die Passivstellung kann ebenfalls durch das Stellelement erzeugt werden oder alternativ durch ein Schalt-Federelement, welches das Schaltelement in Richtung auf die Passivstellung vorgespannt. Durch die indirekte Betätigung über das Stellelement können unterschiedliche Vorteile erreicht werden. So kann das Stellelement besser zugänglich sein als das Schaltelement. Auch ist es möglich, durch das Zusammenwirken von Stellelement und Schaltelement eine Übersetzung zur erreichen, was insbesondere bei einer manuellen Betätigung des Schaltmechanismus vorteilhaft sein kann.

Eine Ausführungsform sieht vor, dass das Stelleelement um eine Stellelement-Schwenkachse schwenkbar ist und einen Exzenterabschnitt aufweist, der mit einem Stellabschnitt des Schaltelements zusammenwirkt, welcher von der Schaltelement-Schwenkachse sowie von dem wenigstens einen Schaltabschnitt beabstandet ist. Der Exzenterabschnitt ist allgemein nicht-symmetrisch zur Stellelement-Schwenkachse ausgebildet. Bevorzugt springt er in einem begrenzten Bereich radial vor. Wird der Exzenterabschnitt in Richtung des Stellabschnitts gedreht, führt dies zu einer Auslenkung des Stellabschnitts und somit des gesamten Schaltelements. Der Stellabschnitt des Schaltelements ist zum einen von der Schaltelement-Schwenkachse beabstandet, so dass der Exzenterabschnitt über den Stellabschnitt ein Drehmoment auf das Schaltelement ausüben kann. Zum anderen ist der Stellabschnitt auch von dem Schaltabschnitt oder den Schaltabschnitten beabstandet. Er kann relativ zu dem wenigstens einen Schaltabschnitt (bezüglich der Schaltelement-Schwenkachse) axial, radial und/oder tangential versetzt sein. Insbesondere kann er um wenigstens 90° oder wenigstens 150° zu dem wenigstens einen Schaltabschnitt versetzt sein. Somit können die genannten Abschnitte gewissermaßen auf gegenüberliegenden Seiten der Schaltelement-Schwenkachse liegen, was unter Umständen hinsichtlich des Bauraums vorteilhaft ist. Durch eine radial unterschiedliche Anordnung kann eine Art Übersetzung erreicht werden, so dass beispielsweise eine seitens des Exzenterabschnitts einwirkende Kraft verstärkt oder eine durch den Exzenterabschnitt hervorgerufene Auslenkung vergrößert werden kann. Bevorzugt sind die Form des Exzenterabschnitts und des Stellabschnitts sowie ihrer Anordnung zueinander so abgestimmt, dass der Stellabschnitt in der Passivstellung oder in deren Nähe zunächst relativ nah an der Stellelement-Schwenkachse mit dem Exzenterabschnitt zusammenwirkt. Somit führt ein im Stellelement erzeugtes Drehmoment zu einer vergleichsweise großen Kraft auf den Stellabschnitt. Dies kann vorteilhaft sein, um eine anfangs herrschende Haftreibung zu überwinden, die einer Bewegung des ersten Kopplungszahnrads entgegensteht. Wenn ein Übergang von der Haftreibung zur Gleitreibung erfolgt ist, ist eine geringere Kraft ausreichend, so dass der Kontaktbereich zwischen Exzenterabschnitt und Stellabschnitt im weiteren Verlauf weiter von der Stellelement-Schwenkachse fort verlagert werden kann. Normalerweise ist eine einfache gleitende Verbindung zwischen Exzenterabschnitt und Stellabschnitt ausreichend, es könnte allerdings auch hier eine Verbindung über ein Wälzlager oder einen einzelnen Wälzkörper vorgesehen sein.

Es sind unterschiedliche Ausgestaltungen des Stellelements denkbar. Sofern der Kopplungsmechanismus aktorisch betätigt werden soll, kann das Stellelement zur Verbindung mit einem entsprechenden Aktor ausgebildet sein. Sofern allerdings eine manuelle Verstellung des Kopplungsmechanismus vorgesehen ist, ist es bevorzugt, dass das Stellelement ein außerhalb eines Getriebegehäuses angeordnetes Antriebsprofil zum formschlüssigen Eingriff mit einem Werkzeug aufweist. Das Antriebsprofil kann beispielsweise als Innensechskant, Außensechskant, Vierkant oder dergleichen ausgebildet sein. Es ist komplementär ausgebildet zu dem Werkzeug, mit welchem es bedienbar ist, normalerweise einem Schraubenschlüssel oder Schraubendreher. Da das Antriebsprofil für den Benutzer zugänglich sein muss, ist es außerhalb des Getriebegehäuses angeordnet, wobei weitere Teile des Stellelements, insbesondere der Exzenterabschnitt, ebenso wie das Schaltelement bevorzugt innerhalb des Getriebegehäuses angeordnet sind.

Die Aufgabe wird weiterhin gelöst mit einer Rundballenpresse mit einem Rahmen, einem relativ zum Rahmen antreibbaren Presselement, welches dazu ausgebildet ist, auf Erntegut in einer Presskammer einzuwirken, einem relativ zum Rahmen antreibbaren Zuführelement, welches dazu ausgebildet ist, Erntegut zur Presskammer hin zu fördern, sowie mit einer erfindungsgemäßen Getriebeeinheit, wobei der Presselement-Abtriebsteil wenigstens indirekt antreibend an das Presselement gekoppelt ist und der Zuführelement-Abtriebsteil wenigstens indirekt antreibend an das Zuführelement gekoppelt ist.

Die genannten Begriffe wurden mit Bezug auf die erfindungsgemäße Getriebeeinheit erläutert und werden daher nicht nochmals erklärt. Vorteilhafte Ausgestaltungen der erfindungsgemäßen Rundballenpresse entsprechen denen der erfindungsgemäßen Getriebeeinheit.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine schematisierte Seitenansicht einer erfindungsgemäßen Rundballenpresse;
- Fig. 2: eine perspektivische Darstellung einer erfindungsgemäßen Getriebeeinheit einschließlich eines Getriebegehäuses;
- Fig. 3: eine perspektivische Darstellung der Getriebeeinheit aus Fig.2 ohne das Getriebegehäuse;
- Fig. 4: eine Vorderansicht der Getriebeeinheit aus Fig.2 ohne das Getriebegehäuse in einem ersten Zustand;
- Fig. 5: eine Vorderansicht der Getriebeeinheit aus Fig.2 ohne das Getriebegehäuse in einem zweiten Zustand; und
- Fig. 6: eine Schnittdarstellung eines Teils der Getriebeeinheit aus Fig.2.

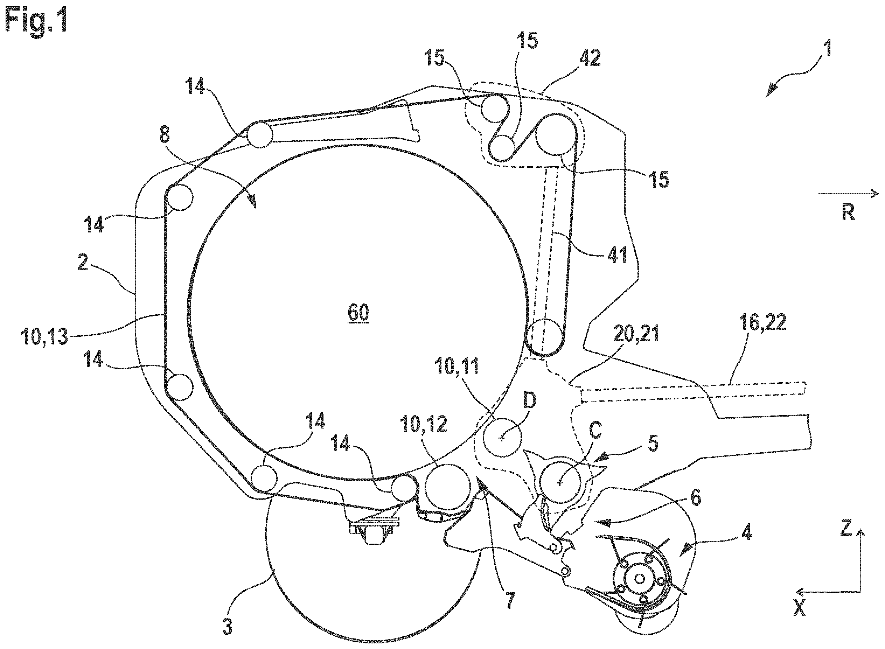

Fig. 1 zeigt eine Rundballenpresse 1 gemäß der vorliegenden Erfindung, mit einer erfindungsgemäßen Getriebeeinheit 20. In den Figuren sind eine Längsachse X, eine Querachse Y sowie eine Hochachse Z der Rundballenpresse 1 eingezeichnet. Die Rundballenpresse 1 ist dazu vorgesehen, von einer Zugmaschine beziehungsweise einem Schlepper (nicht dargestellt) gezogen zu werden. An einem Rahmen 2 der Rundballenpresse 1 ist abgesehen von Laufrädern 3, auf welchen die Rundballenpresse 1 aufsteht, eine Pressvorrichtung 10 angeordnet, die eine Presskammer 8 variabler Größe zur Bildung eines Erntegutballens 60 ausbilden kann. Mit einer in Fahrtrichtung R vorderseitig am Rahmen 2 angeordneten Pick-up 4 wird das Erntegut wie zum Beispiel Stroh, Heu oder Gras, vom Boden aufgenommen und gelangt weiter zu einem Schneidrotor 5, der als Zuführelement fungiert. Er ergreift das Erntegut, zerschneidet es und transportiert es weiter entgegen der Fahrtrichtung R und durch einen Förderkanal 6 in Richtung eines Zuführbereichs 7 der Presskammer 8. Statt des Schneidrotors 5 kann auch ein einfacher Förderrotor vorgesehen sein.

Die Pressvorrichtung 10 weist in diesem Fall eine Presswalze 11 auf, welche als erstes Presselement dient, eine dieser gegenüberliegende Starterwalze 12, sowie einen als zweites Presselement fungierenden Pressriemen 13, welche zusammen die Presskammer 8 definieren. Die Presswalze 11 sowie der Pressriemen 12 bewirken eine Rotation des Erntegutballens 50 und gleichzeitig ein Verpressen des Ernteguts. Der Pressriemen 13 ist über eine Mehrzahl drehbar gelagerten Führungsrollen 14 sowie Antriebsrollen 15 geführt und wird durch diese unter Spannung gehalten. Während die Führungsrollen 14 rein passiv gegenüber dem Rahmen drehbar sind, sind die Antriebsrollen 15 aktiv antreibbar und dienen dazu, den Pressriemen 13 in eine umlaufende Bewegung zu versetzen.

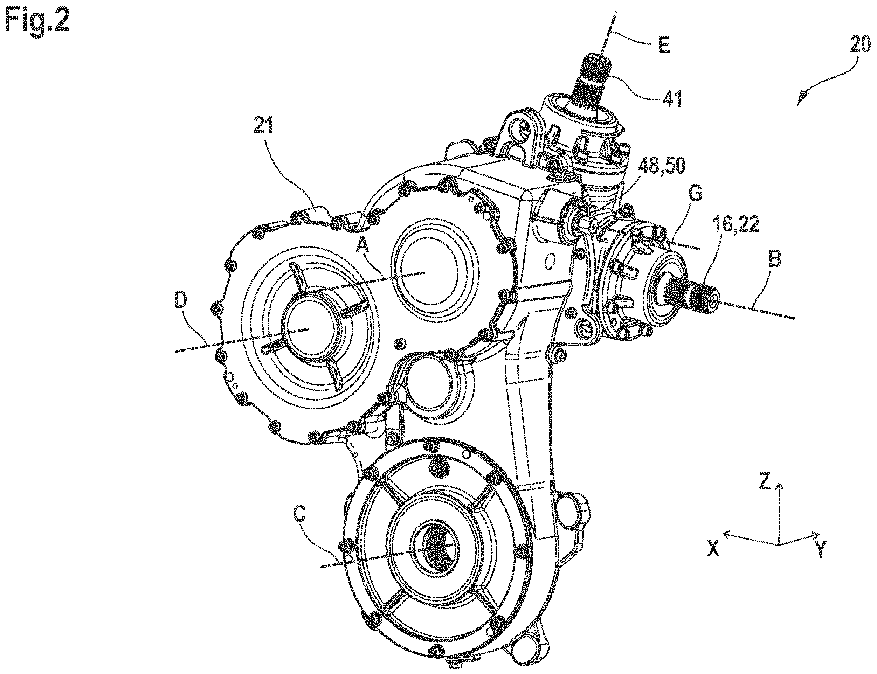

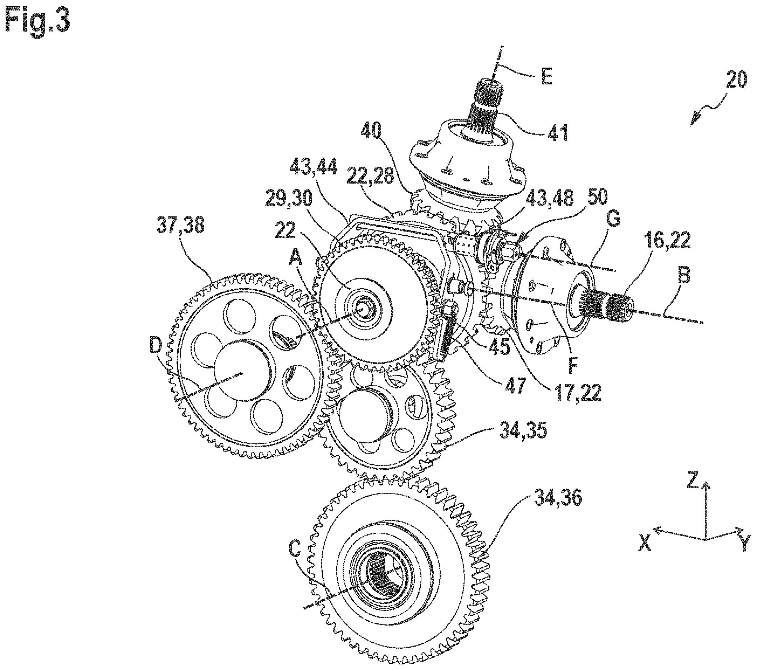

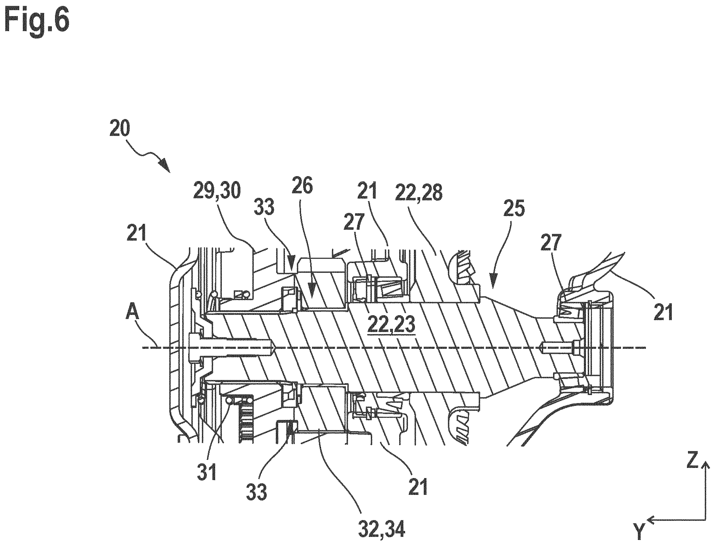

Die dargestellte Rundballenpresse 1 verfügt über keinen eigenen Antriebsmotor. Sämtliche Antriebsleistung wird vom Schlepper übertragen. In diesem Fall wird die Pick-up 4 hydraulisch angetrieben, wozu die Rundballenpresse 1 mit einer nicht dargestellten Hydraulikleitung mit dem Schlepper verbunden wird. Die Antriebsleistung für den Schneidrotor 5, die Presswalze 11, die Starterwalze 12 sowie den Pressriemen 13 wird hingegen mechanisch seitens des Schleppers übertragen. Hierzu wird eine in Fig.1 schematisch dargestellte Eingangswelle 16, die als Gelenkwelle ausgebildet ist, mit einer Zapfwelle des Schleppers verbunden. Die Eingangswelle 16 führt zu der in Fig.1 nur angedeuteten und in Fig.2 bis 6 im Detail dargestellten Getriebeeinheit 20. Ein drehfest mit der Eingangswelle 16 verbundenes Eingangswellen-Zahnrad 17 kämmt mit einem Antriebswellen-Zahnrad 28, das seinerseits drehfest mit einer Antriebswelle 23 verbunden ist. Die genannten Zahnräder 17, 28 sind als Kegelräder ausgebildet. Die Antriebswelle 23 bildet ein zentrales Element eines Antriebsteils 22 der Getriebeeinheit 20. Auch die Eingangswelle 16, das Eingangswellen-Zahnrad 17 und das Antriebswellen-Zahnrad 28 können als Elemente des Antriebsteils 22 angesehen werden. Die Eingangswelle 16 ist über zwei (in Fig.6 dargestellte) Wälzlager 27 um eine Antriebswellen-Drehachse A, die hier parallel zur Querachse Y verläuft, drehbar am Getriebegehäuse 21 gelagert. Die Eingangswelle 16 ist um eine zur Antriebswellen-Drehachse A senkrecht verlaufende Eingangswellen-Drehachse B drehbar. Während das Antriebswellen-Zahnrad 28 starr mit der Antriebswelle 23 verbunden ist, sind zwei Kopplungszahnräder 30, 32 beweglich auf der Antriebswelle 23 angeordnet. Während das Antriebswellen-Zahnrad 28 in einem Lagerabschnitt 25 der Antriebswelle 23 zwischen den Wälzlagern 27 angeordnet ist, sind die Kopplungszahnräder 30, 32 in einem freitragenden Abschnitt 26 angeordnet.

Ein erstes Kopplungszahnrad 30, welches als Stirnrad ausgebildet ist, ist drehfest mit der Antriebswelle 23 verbunden, jedoch bezüglich der Antriebswelle-Drehachse A axial verschiebbar. Ein zweites Kopplungszahnrad 32, das näher am Lagerabschnitt 25 angeordnet ist, ist axial auf der Antriebswelle 23 fixiert, allerdings gegenüber dieser frei drehbar. Das erste Kopplungszahnrad 30 kämmt mit einem Presswalzen-Zahnrad 38, das drehfest mit der Presswalze 11 verbunden ist. Das Presswalzen-Zahnrad 38 gehört zu einem Presswalzen-Abtriebsteil 37 der Getriebeeinheit 20, welcher auch als erstes Presselement-Abtriebsteil bezeichnet werden kann. Die Presswalze 11 ist durch einen nicht dargestellten Kettenantrieb an die Starterwalze 12 gekoppelt. Das zweite Kopplungszahnrad 32 kämmt mit einem Zwischenzahnrad 35, das seinerseits wiederum mit einem Schneidrotor-Zahnrad 36 kämmt, welches drehfest mit dem Schneidrotor 5 verbunden ist. Das zweite Kopplungszahnrad 32, das Zwischenzahnrad 35 sowie das Schneidrotor-Zahnrad 36 gehören zu einem Schneidrotor-Abtriebsteil 34, welcher auch als Zuführelement-Abtriebswelle bezeichnet werden kann. Die hier genannten Zahnräder 30, 32, 35, 36, 38 sind alle als Stirnräder ausgebildet.

Das Antriebswellen-Zahnrad 28 kämmt mit einem ebenfalls als Kegelrad ausgebildeten Verbindungswellen-Zahnrad 40, das auf einer aufwärts verlaufenden Verbindungswelle 41 sitzt. Diese ist um eine senkrecht zur Antriebswellen-Drehachse A verlaufende Verbindungswellen-Drehachse E drehbar und stellt eine Verbindung zu einem Antriebsrollengetriebe 42 her, über welches die Antriebsrollen 15 antreibbar sind. Das Verbindungswellen-Zahnrad 40 gehört zu einem Pressriemen-Abtriebsteil 39 der Getriebeeinheit 20, welcher auch als zweiter Presselement-Abtriebsteil bezeichnet werden kann.

Während der Antriebsteil 22 permanent antreibend mit dem Presswalzen-Abtriebsteil 37 und dem Pressriemen-Abtriebsteil 39 gekoppelt ist, ist die Kopplung zwischen Antriebsteil 22 und Schneidrotor-Abtriebsteil 34 von der Stellung des ersten Kopplungszahnrad 30 abhängig. Im normalen Betriebszustand der Rundballenpresse 1 ist das erste Kopplungszahnrad 30 in einer Kopplungsstellung angeordnet, in welcher es über eine Klauenkupplung 33 mit dem zweiten Kopplungszahnrad 32 eingreift. Durch den Formschluss der Klauenkupplung 33 wird das zweite Kopplungszahnrad 32 drehfest mit dem ersten Kopplungszahnrad 30 und somit auch mit der Antriebswelle 23 verbunden. Entsprechend sind die Bewegung der Presswalze 11, des Pressriemens 13 sowie des Schneidrotors 5 über die Getriebeeinheit 20 aneinander gekoppelt.

Im Fall einer Blockade des Schneidrotors 5, zum Beispiel aufgrund eines Erntegutstaus oder eines mit aufgenommenen Fremdkörpers, ist es sinnvoll, den Antrieb der Rundballenpresse 1 zu stoppen und den Schneidrotor 5 händisch entgegen seiner normalen Drehrichtung zu bewegen, um die Blockade beheben zu können. Um zu vermeiden, dass auch der Pressriemen 13 sowie die Presswalze 11 mit bewegt werden müssen, wird hierzu der Schneidrotor-Abtriebsteil 34 vom Antriebsteil 22 entkoppelt. Dabei wird das erste Kopplungszahnrad 30 axial vom zweiten Kopplungszahnrad 32 fort in eine Freigabestellung verschoben, so dass der Formschluss über die Klauenkupplung 33 aufgehoben wird. Danach sind das zweite Kopplungszahnrad 32 und die Antriebswelle 23 frei gegeneinander drehbar. Das Presswalzen-Zahnrad 38 ist so breit ausgelegt, dass das erste Kopplungszahnrad 30 während der gesamten Verschiebung und auch beim Erreichen der Freigabestellung mit dem Presswalzen-Zahnrad 38 in Eingriff bleibt.

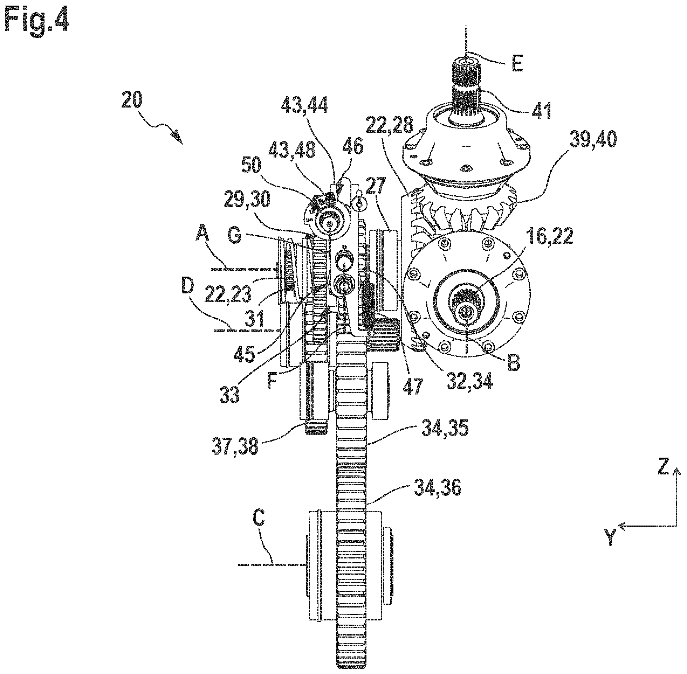

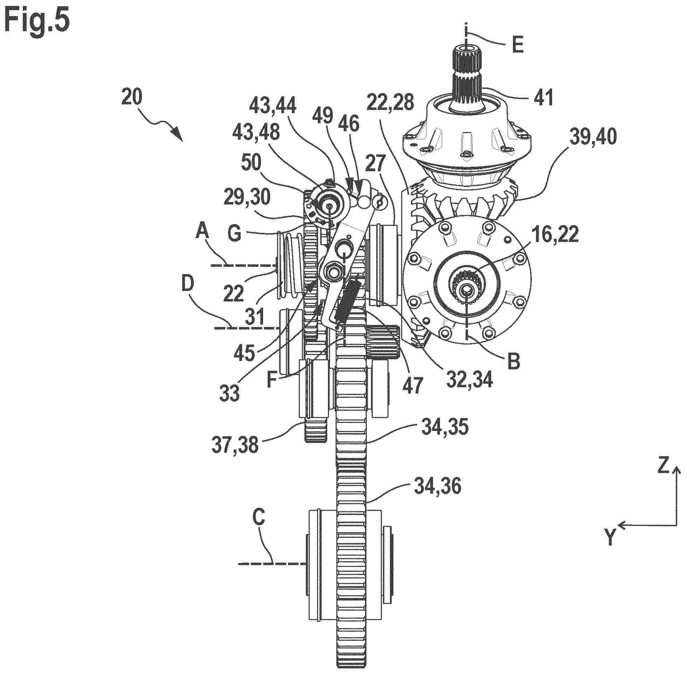

Sofern keine weiteren Axialkräfte auf das erste Kopplungszahnrad 30 einwirken, wird es durch ein Kopplungs-Federelement 31, das als Schraubenfeder die Antriebswelle 23 umgibt, in die Kopplungsstellung geschoben beziehungsweise in dieser gehalten. Um das erste Kopplungszahnrad 30 in die Freigabestellung zu verschieben, kann ein Benutzer einen Schaltmechanismus 43 nutzen. Dieser weist zum einen eine als Schaltelement dienende Schaltgabel 44 auf sowie zum anderen ein Stellelement 48. Die Schaltgabel 44 ist gegenüber dem Getriebegehäuse 21 um eine senkrecht zur Antriebswellen-Drehachse A verlaufende Schaltgabel-Schwenkachse F schwenkbar, während das Stellelement um eine ebenfalls zur Antriebswellen-Drehachse A senkrechte Stellelement-Schwenkachse G schwenkbar ist. Die Schaltgabel 44 weist zwei Schaltabschnitte 45 auf, mit welchen sie axial seitlich am ersten Kopplungszahnrad 30 angreifen kann, um dieses in die Freigabestellung zu verschieben. Um die Reibung zu reduzieren, weist jeder Schaltabschnitt 45 ein Kugellager (ohne Bezugszeichen) auf. Bezüglich der Schaltgabel-Schwenkachse F den Schaltabschnitten 45 gegenüberliegend ist ein Stellabschnitt 46 ausgebildet. Das Stellelement 48 weist einen Exzenterabschnitt 49 auf, der mit dem Stellabschnitt 46 zusammenwirken kann, um die Schaltgabel 44 aus einer in Fig. 4 dargestellten Passivstellung in eine in Fig. 5 dargestellte Aktivstellung zu verstellen. Beim Verstellen, das heißt Schwenken, der Schaltgabel 44 aus der Passivstellung in die Aktivstellung wirken die Schaltabschnitte 45 axial seitlich auf das erste Kopplungszahnrad 30 ein und drücken dieses entgegen der Kraft des Kopplungs-Federelements 31 in die Freigabestellung.

Ohne die Einwirkung des Stellelements 48 wird die Schaltgabel 44 durch ein Schalt-Federelement 47, das in hier nicht näher dargestellter Weise mit dem Getriebegehäuse 21 verbunden ist, in der Passivstellung gehalten. Wird allerdings das Stellelement 48 gedreht, übt der Exzenterabschnitt 49 eine Kraft auf den Stellabschnitt 46 und somit ein Drehmoment auf die Schaltgabel 44 aus. Form und Position von Exzenterabschnitt 49 und Stellabschnitt 46 sind so aufeinander abgestimmt, dass ausgehend von der Passivstellung der Schaltgabel 44 der Stellabschnitt 46 zunächst vergleichsweise nah an der Stellelement-Schwenkachse G mit dem Exzenterabschnitt 49 zusammenwirkt. Dementsprechend resultiert aus einem gegebenen Drehmoment im Stellelement 48 zunächst eine relativ große Kraft auf den Stellabschnitt 46 und somit auch eine relativ große Kraft auf das erste Kopplungszahnrad 30. Dies dient dazu, eine anfängliche Haftreibung zwischen ersten Kopplungszahnrad 30 und Antriebswelle 23 zu überwinden. Im weiteren Verlauf der Drehung des Stellelements 48 verschiebt sich der Kontaktpunkt zum Stellabschnitt 46 von der Stellelement-Schwenkachse G fort, so dass eine geringere Kraft resultiert, allerdings einen größerer Verschiebungsweg erreicht werden kann. Das Stellelement 48 weist ein Antriebsprofil 50 auf, in diesem Fall ein Außensechskant-Profil, das von außerhalb des Getriebegehäuses 21 zugänglich ist. Der Benutzer kann mit einem geeigneten Schraubenschlüssel auf das Antriebsprofil 50 einwirken und hierdurch die Verstellung des Stellelements 48 bewirken, aus welcher die Verstellung der Schaltgabel 44 in die aktive Stellung und die Verstellung des ersten Kopplungszahnrads 30 in die Freigabestellung resultieren. Wenn der Benutzer das Stellelement wieder zurückstellt, kehren die Schaltgabel 44 und das erste Kopplungszahnrad 30 aufgrund der Vorspannung durch die Federelemente 31, 47 in die Passivstellung sowie in die Kopplungsstellung zurück.

## Patentansprüche

1. Getriebeeinheit (20) für eine Rundballenpresse (1), mit einem zum Einkoppeln eines Antriebsdrehmoments ausgebildeten Antriebsteil (22), aufweisend eine um eine Antriebswellen-Drehachse (A) drehbare Antriebswelle (23), einem Presselement-Abtriebsteil (37), an welchen der Antriebsteil (22) antreibend gekoppelt ist und welcher dazu vorgesehen ist, wenigstens indirekt ein Presselement (11) anzutreiben, um auf Erntegut in einer Presskammer (8) einzuwirken, einem Zuführelement-Abtriebsteil (34), welcher dazu vorgesehen ist, wenigstens indirekt ein Zuführelement (5) anzutreiben, um Erntegut zur Presskammer (8) hin zu fördern, sowie einem Kopplungsmechanismus (29) zum wahlweisen Koppeln und Entkoppeln von Antriebsteil (22) und Zuführelement-Abtriebsteil (34),
**dadurch gekennzeichnet, dass**
der Kopplungsmechanismus (29) ein erstes Kopplungszahnrad (30) aufweist, das verdrehsicher mit der Antriebswelle (23) verbunden und axial gegenüber dieser verstellbar ist, wodurch es wahlweise in einer Kopplungsstellung mit dem Zuführelement-Abtriebsteil (34) antreibend koppelbar und in einer Freigabestellung von diesem entkoppelbar ist, wobei das erste Kopplungszahnrad (30) sowohl in der Kopplungsstellung als auch in der Freigabestellung antreibend mit dem Presselement-Abtriebsteil (37) gekoppelt ist.

2. Getriebeeinheit nach Anspruch 1, **dadurch gekennzeichnet, dass** der Zuführelement-Abtriebsteil (34) ein zweites Kopplungszahnrad (32) aufweist, das die Antriebswelle (23) koaxial umgibt, wobei das erste Kopplungszahnrad (30) in der Kopplungsstellung durch einen Formschluss mit dem zweiten Kopplungszahnrad (32) dieses verdrehsicher mit der Antriebswelle (23) verbindet, während das zweite Kopplungszahnrad (32) durch Aufheben des Formschlusses in der Freigabestellung frei gegenüber der Antriebswelle (23) drehbar ist.

3. Getriebeeinheit nach einem der vorangehenden Ansprüche, **dadurch gekennzeichnet, dass** diese ein Getriebegehäuse (21) zur stationären Anordnung an der Rundballenpresse (1) aufweist und die Antriebswelle (23) einen am Getriebegehäuse (21) drehbar gelagerten Lagerabschnitt (25) aufweist sowie einen freitragenden Abschnitt (26), wobei die Kopplungszahnräder (30, 32) am freitragenden Abschnitt (26) angeordnet sind.

4. Getriebeeinheit nach einem der vorangehenden Ansprüche, **dadurch gekennzeichnet, dass** das erste Kopplungszahnrad (30) antreibend mit einem ersten Presselement-Abtriebsteil (37) gekoppelt ist und ein verdrehsicher mit der Antriebswelle (23) verbundenes Antriebswellen-Zahnrad (28) antreibend mit einem zweiten Presselement-Abtriebsteil (39) gekoppelt ist.

5. Getriebeeinheit nach einem der vorangehenden Ansprüche, **dadurch gekennzeichnet, dass** der erste Presselement-Abtriebsteil (37) dazu vorgesehen ist, wenigstens indirekt eine Presswalze (11) in einem Zuführbereich (7) der Presskammer (8) anzutreiben, und der zweite Presselement-Abtriebsteil (39) dazu vorgesehen ist, wenigstens indirekt ein endloses, umlaufend antreibbares Presselement (13) anzutreiben.

6. Getriebeeinheit nach einem der vorangehenden Ansprüche, **dadurch gekennzeichnet, dass** der erste Presselement-Abtriebsteil (37) ein Presswalzen-Zahnrad (38) aufweist, das zur verdrehsicheren Verbindung mit einer Presswalze (11) vorgesehen ist und das, entweder direkt oder indirekt über wenigstens ein Zwischenzahnrad, mit dem ersten Kopplungszahnrad (30) zusammenwirkt.

7. Getriebeeinheit nach einem der vorangehenden Ansprüche, **dadurch gekennzeichnet, dass** der Förderelement-Abtriebsteil (34) ein Förderelement-Zahnrad (36) aufweist, das zur verdrehsicheren Verbindung mit dem Förderelement (5) vorgesehen ist und das, entweder direkt oder indirekt über wenigstens ein Zwischenzahnrad (35), mit dem zweiten Kopplungszahnrad (32) zusammenwirkt.

8. Getriebeeinheit nach einem der vorangehenden Ansprüche, **dadurch gekennzeichnet, dass** das Antriebswellen-Zahnrad (28) mit einem Eingangswellen-Zahnrad (17) zusammenwirkt, durch welches das Antriebsdrehmoment auf die Antriebswelle (23) übertragbar ist.

9. Getriebeeinheit nach einem der vorangehenden Ansprüche, **dadurch gekennzeichnet, dass** das erste Kopplungszahnrad (30) durch ein Kopplungs-Federelement (31) in Richtung auf die Kopplungsstellung vorgespannt ist.

10. Getriebeeinheit nach einem der vorangehenden Ansprüche, **dadurch gekennzeichnet, dass** diese einen Schaltmechanismus (43) aufweist, mit wenigstens einem Schaltelement (44), das zwischen einer Passivstellung und einer Aktivstellung verstellbar ist und beim Verstellen in die Aktivstellung axial seitlich am ersten Kopplungszahnrad (30) angreift und dieses die Freigabestellung verstellt.

11. Getriebeeinheit nach einem der vorangehenden Ansprüche, **dadurch gekennzeichnet, dass** das Schaltelement (44) durch Schwenken um eine Schaltelement-Schwenkachse (F) zwischen der Aktivstellung und der Passivstellung verstellbar ist und mit wenigstens einem von der Schaltelement-Schwenkachse (F) beabstandeten Schaltabschnitt (45) am ersten Kopplungszahnrad (30) angreift.

12. Getriebeeinheit nach einem der vorangehenden Ansprüche, **dadurch gekennzeichnet, dass** der Schaltmechanismus (43) ein Stellelement (48) aufweist, das dazu eingerichtet ist, das Schaltelement (44) zu beaufschlagen, um dieses in die Aktivstellung zu verstellen.

13. Getriebeeinheit nach einem der vorangehenden Ansprüche, **dadurch gekennzeichnet, dass** das Stelleelement (48) um eine Stellelement-Schwenkachse (G) schwenkbar ist und einen Exzenterabschnitt (49) aufweist, der mit einem Stellabschnitt (46) des Schaltelements (44) zusammenwirkt, welcher von der Schaltelement-Schwenkachse (F) sowie von dem wenigstens einen Schaltabschnitt (45) beabstandet ist.

14. Getriebeeinheit nach einem der vorangehenden Ansprüche, **dadurch gekennzeichnet, dass** das Stellelement (48) ein außerhalb eines Getriebegehäuses (21) angeordnetes Antriebsprofil (50) zum formschlüssigen Eingriff mit einem Werkzeug aufweist.

15. Rundballenpresse (1) mit einem Rahmen (2), einem relativ zum Rahmen (2) antreibbaren Presselement (11), welches dazu ausgebildet ist, auf Erntegut in einer Presskammer (8) einzuwirken, einem relativ zum Rahmen (2) antreibbaren Zuführelement (5), welches dazu ausgebildet ist, Erntegut zur Presskammer (8) hin zu fördern, sowie mit einer Getriebeeinheit (20) nach einem der vorangehenden Ansprüche, wobei der Presselement-Abtriebsteil (37) wenigstens indirekt antreibend an das Presselement (11) gekoppelt ist und der Zuführelement-Abtriebsteil (34) wenigstens indirekt antreibend an das Zuführelement (5) gekoppelt ist.

## Claims

1. Transmission unit (20) for a round baler (1), comprising a drive part (22) designed to couple a drive torque, the drive part having a drive shaft (23) rotatable about a drive shaft rotation axis (A), a pressing element driven part (37) to which the drive part (22) is drivingly coupled and which is provided to at least indirectly drive a pressing element (11) in order to act on crop material in a pressing chamber (8), a feed element driven part (34) which is provided to at least indirectly drive a feed element (5) in order to convey crop material to the pressing chamber (8), and a coupling mechanism (29) for selectively coupling and decoupling the drive part (22) and the feed element driven part (34),
**characterized in that**
the coupling mechanism (29) has a first coupling gear (30) which is non-rotatably connected to the drive shaft (23) and is axially adjustable relative thereto, whereby it can be selectively drivingly coupled in a coupling position to the feed element driven part (34) and decoupled therefrom in a release position, the first coupling gear (30) being drivingly coupled to the pressing element driven part (37) both in the coupling position and in the release position.

2. Transmission unit according to claim 1, **characterized in that** the feed element driven part (34) has a second coupling gear (32) which coaxially surrounds the drive shaft (23), the first coupling gear (30) in the coupling position non-rotatably connecting the second coupling gear (32) to the drive shaft (23) by a form-fitting connection therewith, while the second coupling gear (32) is freely rotatable relative to the drive shaft (23) by canceling the form-fitting connection in the release position.

3. Transmission unit according to either of the preceding claims,
**characterized in that** this has a transmission housing (21) for stationary arrangement on the round baler (1) and the drive shaft (23) has a bearing portion (25) rotatably mounted on the transmission housing (21) and a cantilevered portion (26), the coupling gears (30, 32) being arranged on the cantilevered portion (26).

4. Transmission unit according to any of the preceding claims,
**characterized in that** the first coupling gear (30) is drivingly coupled to a first pressing element driven part (37) and a drive shaft gear (28) non-rotatably connected to the drive shaft (23) is drivingly coupled to a second pressing element driven part (39).

5. Transmission unit according to any of the preceding claims,
**characterized in that** the first pressing element driven part (37) is provided to at least indirectly drive a pressing roller (11) in a feed region (7) of the pressing chamber (8), and the second pressing element driven part (39) is provided to at least indirectly drive an endless, rotatingly drivable pressing element (13).

6. Transmission unit according to any of the preceding claims,
**characterized in that** the first pressing element driven part (37) has a pressing roller gear (38) which is provided for non-rotatably connecting to a pressing roller (11) and which cooperates with the first coupling gear (30), either directly or indirectly via at least one intermediate gear.

7. Transmission unit according to any of the preceding claims,
**characterized in that** the conveying element driven part (34) has a conveying element gear (36) which is provided for non-rotatably connecting to the conveying element (5) and which cooperates with the second coupling gear (32), either directly or indirectly via at least one intermediate gear (35).

8. Transmission unit according to any of the preceding claims,
**characterized in that** the drive shaft gear (28) cooperates with an input shaft gear (17), through which the drive torque can be transmitted to the drive shaft (23).

9. Transmission unit according to any of the preceding claims,
**characterized in that** the first coupling gear (30) is prestressed by a coupling spring element (31) in the direction of the coupling position.

10. Transmission unit according to any of the preceding claims,
**characterized in that** this has a shift mechanism (43) with at least one shift element (44) which is adjustable between a passive position and an active position and, when adjusted to the active position, engages axially laterally on the first coupling gear (30) and adjusts the release position.

11. Transmission unit according to any of the preceding claims,
**characterized in that** the shift element (44) is adjustable between the active position and the passive position by pivoting about a shift element pivot axis (F) and engages the first coupling gear (30) with at least one shift portion (45) spaced apart from the shift element pivot axis (F).

12. Transmission unit according to any of the preceding claims,
**characterized in that** the shift mechanism (43) has an actuating element (48) which is designed to act on the shift element (44) in order to adjust it to the active position.

13. Transmission unit according to any of the preceding claims,
**characterized in that** the actuating element (48) is pivotable about an actuating element pivot axis (G) and has an eccentric portion (49) which cooperates with an actuating portion (46) of the shift element (44), which is spaced apart from the shift element pivot axis (F) and from the at least one shift portion (45).

14. Transmission unit according to any of the preceding claims,
**characterized in that** the actuating element (48) has a drive profile (50) arranged outside a transmission housing (21) for form-fitting engagement with a tool.

15. Round baler (1) comprising a frame (2), a pressing element (11) which is drivable relative to the frame (2) and is designed to act on crop material in a pressing chamber (8), a feed element (5) which is drivable relative to the frame (2) and is designed to convey crop material to the pressing chamber (8), and the baler comprising a transmission unit (20) according to any of the preceding claims, wherein the pressing element driven part (37) is at least indirectly drivingly coupled to the pressing element (11) and the feed element driven part (34) is at least indirectly drivingly coupled to the feed element (5).

## Revendications

1. Unité (20) de transmission d'une presse (1) à balles cylindriques, comprenant une partie (22) d'entraînement, constituée pour l'application d'un couple d'entraînement et comportant un arbre (23) d'entraînement pouvant tourner autour d'un axe (A) de rotation d'arbre d'entraînement, une partie (37) de sortie d'élément de presse, à laquelle la partie (22) d'entraînement est accouplée en entraînement, et qui est prévue pour entraîner un élément (11) de presse au moins indirectement, afin d'agir sur du produit de récolte dans une chambre (8) de presse, une partie (34) de sortie d'élément d'apport, qui est prévue pour entraîner un élément (5) d'apport au moins indirectement, afin d'envoyer du produit de récolte à la chambre (8) de presse, ainsi qu'un mécanisme (29) d'accouplement pour l'accouplement et le désaccouplement au choix de la partie (22) d'entraînement et de la partie (34) de sortie d'élément d'apport,
**caractérisée en ce que**
le mécanisme (29) d'accouplement a une première roue (30) dentée d'accouplement, qui est solidaire en rotation de l'arbre (23) d'entraînement, et qui peut se déplacer axialement par rapport à celui-ci, grâce à quoi, elle peut, au choix, être accouplée en entraînement en une position d'accouplement à la partie (34) de sortie d'élément d'apport et en une position de libération en être désaccouplée, dans laquelle la première roue (30) dentée d'accouplement est accouplée en entraînement à la partie (37) de sortie d'élément de presse à la fois dans la position d'accouplement et dans la position de libération.

2. Unité de transmission suivant la revendication 1, **caractérisée en ce que** la partie (34) de sortie d'élément d'apport a une deuxième roue (32) dentée d'accouplement, qui entoure coaxialement l'arbre (23) d'entraînement, dans laquelle la première roue (30) dentée d'accouplement relie en la position d'accouplement, par une complémentarité de forme avec la deuxième roue (32) dentée d'accouplement, celle-ci d'une manière solidaire en rotation avec l'arbre (23) d'entraînement, tandis que la deuxième roue (32) dentée d'accouplement peut en la position de libération tourner librement par rapport à l'arbre (23) d'entraînement.

3. Unité de transmission suivant l'une des revendications précédentes, **caractérisée en ce que** celle-ci a un carter (21) de transmission pour le montage fixe sur la presse (1) à balles cylindriques et l'arbre (23) d'entraînement a un tronçon (25) de palier monté tournant sur le carter (21) d'entraînement, ainsi qu'un tronçon (26) en porte-à-faux, dans lequel les roues (30, 32) dentées d'accouplement sont montées sur le tronçon (26) en porte-à-faux.

4. Unité de transmission suivant l'une des revendications précédentes, **caractérisée en ce que** la première roue (30) dentée d'accouplement est accouplée en entraînement à une première partie (37) de sortie d'élément de presse et une roue (28) dentée d'arbre d'entraînement, solidaire en rotation de l'arbre (23) d'entraînement, est accouplée en entraînement à une deuxième partie (39) de sortie d'élément de presse.

5. Unité de transmission suivant l'une des revendications précédentes, **caractérisée en ce que** la première partie (37) de sortie d'élément de presse est prévue pour entraîner au moins indirectement un rouleau (11) de presse dans une partie (7) d'apport de la chambre (8) de presse, et la deuxième partie (39) de sortie d'élément de presse est prévue pour entraîner au moins indirectement un élément (13) de presse sans fin pouvant être entraîné en tournant.

6. Unité de transmission suivant l'une des revendications précédentes, **caractérisée en ce que** la première partie (37) de sortie d'élément de presse a une roue (38) dentée de rouleau de presse, qui est prévue pour l'assemblage solidaire en rotation à un rouleau (11) de presse et qui, soit directement, soit indirectement par au moins une roue dentée intermédiaire, coopère avec la première roue (30) dentée d'accouplement.

7. Unité de transmission suivant l'une des revendications précédentes, caractérisée en ce la partie (34) de sortie d'élément d'apport a une roue (36) dentée d'élément d'apport, qui est prévue pour l'assemblage solidairement en rotation avec l'élément (5) d'apport et qui, soit directement, soit indirectement en passant par au moins une roue (35) dentée intermédiaire, coopère avec la deuxième roue (32) dentée d'accouplement.

8. Unité de transmission suivant l'une des revendications précédentes, **caractérisée en ce que** la roue (28) dentée d'arbre d'entraînement coopère avec une roue (17) dentée d'arbre d'entrée, par laquelle le couple d'entraînement peut être transmis à l'arbre (23) d'entraînement.

9. Unité de transmission suivant l'une des revendications précédentes, **caractérisée en ce que** la première roue (30) dentée d'accouplement est précontrainte en direction de la position d'accouplement par un élément (31) de ressort d'accouplement.

10. Unité de transmission suivant l'une des revendications précédentes, **caractérisée en ce que** celle-ci a un mécanisme (43) de commutation comprenant au moins un élément (44) de commutation, qui peut se déplacer entre une position passive et une position active et qui, lorsqu'il vient dans la position active, attaque axialement latéralement la première roue (30) dentée d'accouplement et la met dans la position de libération.

11. Unité de transmission suivant l'une des revendications précédentes, **caractérisée en ce que** l'élément (44) de commutation peut être déplacé par pivotement autour d'un axe (F) de pivotement d'élément de commutation entre la position active et la position passive et attaque la première roue (30) dentée d'accouplement par au moins une partie (45) de commutation à distance de l'axe (F) de pivotement de l'élément de commutation.

12. Unité de transmission suivant l'une des revendications précédentes, caractérisée en ce le mécanisme (43) de commutation a un élément (48) de réglage, qui est agencé pour s'appliquer à l'élément (44) de commutation, afin de mettre celui-ci dans la position active.

13. Unité de transmission suivant l'une des revendications précédentes, **caractérisée en ce que** l'élément (48) de réglage peut pivoter autour d'un axe (G) de pivotement d'élément de réglage et a une partie (49) excentrée, qui coopère avec une partie (46) de réglage de l'élément (44) de commutation, qui est à distance de l'axe (F) de pivotement d'élément de commutation ainsi que d'au moins la partie (45) de commutation.

14. Unité de transmission suivant l'une des revendications précédentes, **caractérisée en ce que** l'élément (48) de réglage a, pour l'attaque à complémentarité de forme avec un outil, un profil (50) d'entraînement monté à l'extérieur d'un carter (21) d'entraînement.

15. Presse (1) à balles cylindrique comportant un cadre (2), un élément (11) de presse pouvant être entraîné par rapport au cadre (2) et constitué pour agir sur du produit de récolte dans une chambre (8) de presse, un élément (5) d'apport pouvant être entraîné par rapport au cadre (2), qui est constitué pour transporter du produit de récolte à la chambre (8) de presse, ainsi qu'une unité (20) d'entraînement suivant l'une des revendications précédentes, dans laquelle la partie (37) de sortie d'élément de presse est au moins indirectement accouplée en entraînement à l'élément (11) de presse et la partie (34) de sortie d'élément d'apport est au moins indirectement accouplée en entraînement à l'élément (5) d'apport.
